# EUROPÄISCHE PATENTSCHRIFT

(11) **EP 0 888 800 B1**
(45) Veröffentlichungstag und Bekanntmachung des Hinweises auf die Patenterteilung: **10.12.2003**
(21) Anmeldenummer: 97810437.0
(22) Anmeldetag: 03.07.1997
(51) Int. Cl.: B01D 24/42

(54) **Drainageelement zu rückspülbaren Filterbecken**
Drainage element for reversible flow filter basin
Element de drainage pour basin de filtrage à nettoyage par contre - courant

(43) Veröffentlichungstag der Anmeldung: 07.01.1999
(73) Patentinhaber: VA TECH WABAG Schweiz AG, 8404 Winterthur (CH)
(72) Erfinder: Widmayer, Sigfried, 8405 Winterthur (CH); Vescoli, Daniel, 8400 Winterthur (CH)
(74) Vertreter: VA TECH Patente GmbH & Co

(56) Entgegenhaltungen:
- EP-A- 0 538 876
- WO-A-97/18881
- DE-B- 1 084 697
- FR-A- 1 423 772
- GB-A- 655 338

## Beschreibung

Die Erfindung betrifft ein Drainageelement zu rückspülbaren Filterbecken gemäss Oberbegriff von Anspruch 1 sowie Filterbecken mit derartigen Drainageelementen. Filteranlagen mit solchen Filterbecken werden zur Wasseraufbereitung oder Abwasserreinigung verwendet.

Aus der WO-A-97/18881 ist ein rückspülbares Filterbecken mit tunnelförmigen, nach unten offen ausgebildeten Drainageelementen bekannt. Die Drainageelemente, die parallel angeordnet auf dem Boden des Filterbeckens aufliegen, sind an ihren unteren Rändern durch Platten miteinander verbunden. Die Drainageelemente und die Verbindungsplatten stellen eine weitgehend geschlossene Lage her, die das Filterbett von dem Boden des Filterbeckens und den Innenräumen der Drainageelemente trennt.

Die Drainageelemente des bekannten Filterbeckens sind aus extrudiertem Kunststoff gefertigt. Zwei senkrechte Seitenwände sowie ein bogenförmiger oberer Abschluss bilden die Tunnelform des Elements. Durchtrittslöcher für das Spülgas (Spülluft) sind in dem Bereich des oberen Abschlusses angeordnet; Durchtrittslöcher für die Flüssigkeiten (filtriertes Wasser, Spülwasser) befinden sich in den Seitenwänden unmittelbar über den Verbindungsplatten.

In einer Zone, die die Drainageelemente umgibt, wird das Filterbett aus grobem Kies gebildet. Über dieser Zone lagern eine Schicht mit feinem Kies und schliesslich das eigentliche aus einem feinkörnigen Filtermedium bestehende Filterbett.

Einem solchen heterogenen Filterbett wäre ein homogenes, nur aus einem feinkörnigen Filtermedium gebildetes Filterbett vorzuziehen. Bei den bekannten Drainageelementen würden aber Partikel des feinkörnigen Filtermediums durch die Durchtrittsöffnungen für das Gas bzw. die Flüssigkeiten durchtreten. Werden die Drainageelemente aus Metall, insbesondere aus nichtrostendem Stahl statt aus Kunststoff hergestellt, so können die Durchtrittsöffnungen als feine Schlitze ausgebildet werden, die für die Partikel undurchlässig sind.

Bei einer Verwendung von Metall als Werkstoff für die Drainageelemente wäre es aus konstruktiven Gründen vorteilhaft, wenn man einerseits auf Verbindungsplatten verzichten und andererseits die nach unten offene Tunnelform beibehalten könnte. Da aber in der Praxis der Boden des Filterbeckens immer Abweichungen von einer ebenen Fläche aufweist, ergäben sich bei einem derartigen Drainageelement zwischen dessen unteren Rand und dem Beckenboden spaltförmige Öffnungen, die für Partikel des feinkörnigen Filtermediums durchlässig sind und die Spülflüssigkeit in unkontrollierter Weise durchströmen lassen. Bei früher bekannten Drainageelementen, nämlich Drainagerohren, bestehen die genannten Probleme nicht, da diese Drainagerohre gegen unten geschlossen sind.

Auch bei der Verwendung von Kunststoff als Material für die Herstellung von Drainageelementen kann es von Vorteil sein, wenn eine nach unten offene Tunnelform vorgesehen ist. Beispielsweise liesse sich Material einsparen. Mit einem heterogenen Filterbett ergäbe sich dabei zwar nicht das Problem des Partikeleintritts; aber das Problem mit der Spülflüssigkeit bestünde auch hier.

Aufgabe der Erfindung ist es, für Filterbecken ein Drainageelement mit nach unten offener Tunnelform zu schaffen, wobei die genannten Probleme ausgeräumt sein sollen. Diese Aufgabe wird durch das in Anspruch 1 definierte Drainageelement gelöst.

Das Drainageelement zu rückspülbaren Filterbecken ist tunnelförmig und nach unten offen ausgebildet. Mit solchen Elementen lässt sich am Boden eines Beckens eine behandelte Flüssigkeit abführen und eine Spülflüssigkeit sowie ein Spülgas in ein Filterbett einbringen. Das Element weist einen unteren Rand mit einem elastischen Streifen auf, der Unebenheiten ausgleichend gegen den Beckenboden abdichtet. Dank des Streifens sind keine Partikel eines feinkörnigen Filtermediums in das Drainageelement unter dessen Rand einschwemmbar. Eine offene Tunnelform erlaubt eine Nachbehandlung sowohl der inneren als auch der äusseren Oberflächen des Drainageelments.

Die abhängigen Ansprüche 2 bis 7 beziehen sich auf vorteilhafte Ausführungsformen des erfindungsgemässen Drainageelements. Filterbecken und die Verwendung solcher Filterbecken sind Gegenstände der Ansprüche 8 bis 11.

Nachfolgend wird die Erfindung anhand der Zeichnungen erläutert. Es zeigen:
- Fig. 1: einen Teil eines erf indungsgemässen, aus Stahlblech gefertigten Drainageelements, in perspektivischer Darstellung,
- Fig. 2: eine Seitenansicht desselben Drainageelements,
- Fig. 3: den Querschnitt durch ein Dichtungsprofil zu dem Drainageelement und
- Fig.4-8: verschiedene Ausführungsformen von Dichtungsprofilen.

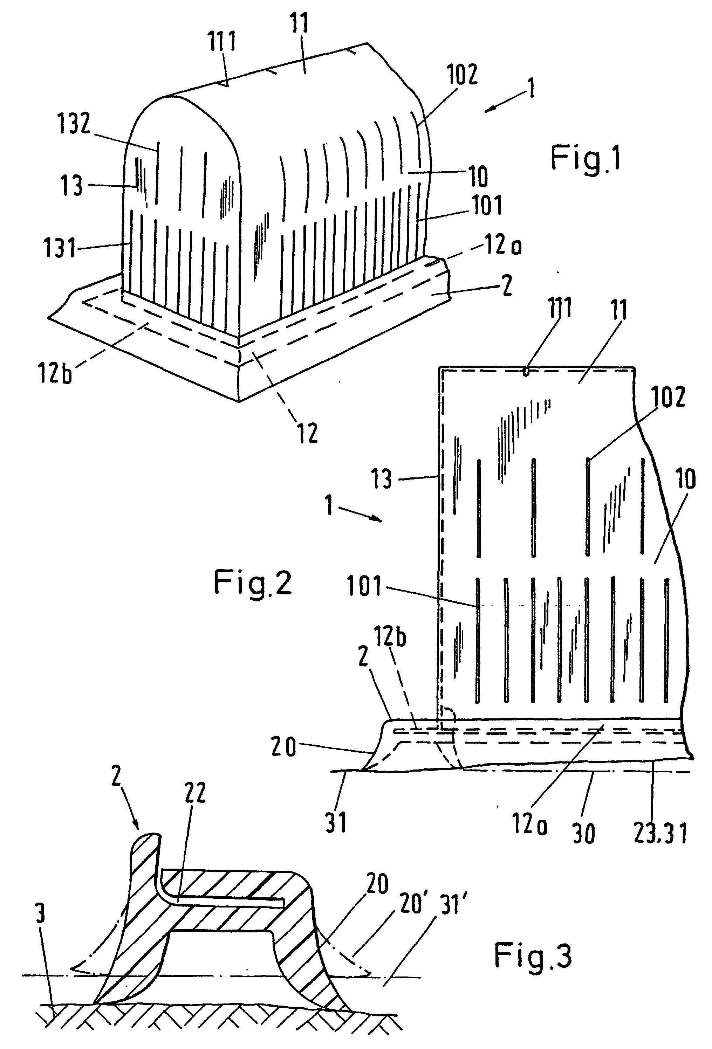

Das in den Figuren 1 und 2 dargestellte Drainagerohr 1 lässt sich einfach aus drei Blechstücken herstellen: einem Stück, das zwei senkrechte Seitenwände 10, einen bogenförmigen oberen Abschluss 11 sowie zwei Flansche 12a umfasst; und zwei ebenen Endstücke 13 mit jeweils einem Flansch 12b. Die drei Stücke werden zusammengeschweisst. Die Flansche 12a und 12b ergeben dabei einen rechteckigen unteren Rand 12 des Drainageelements 1.

Für die zu filtrierende Flüssigkeit und die Spülflüssigkeit sind spaltförmige Durchtrittsöffnungen 101 und 131 in die Wände 10 bzw. 13 eingelassen, die für Partikel eines Filterbetts weitgehend undurchlässig sind. Mit Vorteil erweitern sich diese Öffnungen 101 und 131 auf den Innenflächen jeweils nach einem kurzen spaltförmigen Wanddurchbruch zu einer Nut mit trapezförmigem Querschnitt. Aufgrund dieser Form kann der Strömungswiderstand klein gehalten werden. Entsprechende Durchtrittsöffnungen 102 und 132 sind für die Spülluft vorgesehen. Für eine vollständige Entlüftung sind am Scheitel der Drainageelemente 1 kurze schlitzförmige Durchtrittsöffnungen 111 angeordnet.

Erfindungsgemäss ist jeweils am unteren Rand 12 ein elastischer Streifen 2 angebracht, der gegen den Beckenboden 3 abdichtet und dabei Unebenheiten des Bodens ausgleicht, so dass insbesondere keine Partikel aus dem Filterbett unter dem Rand 12 in den Innenraum des Drainageelements einschwemmbar sind. Der elastische Streifen 2 ist ein ringförmig geschlossenes, über den gesamten Rand sich erstreckendes Dichtungsprofil, dessen Querschnitt in Fig.3 abgebildet ist.

Die Oberfläche 31 des Bodens 3 weicht in der Regel von einer horizontalen Ebene 30 ab, die das mittlere Niveau des Bodens 3 darstellt (strichpunktierte Gerade in Fig.2), und zwar nach oben und nach unten um jeweils bis zu rund 3 mm. Elastische Lippen 20 des Dichtungsprofils 2 sind so gross ausgebildet, dass sie den Unebenheiten des Bodens zu folgen vermögen und partikeldurchlässige Lücken zwischen Boden 3 und Streifen 2 schliessen.

In Fig.3 ist die variable Lage 31' der Bodenoberfläche 31 und die entsprechende Formanpassung 20' der Lippen 20 strichpunktiert angedeutet. Das Dichtungsprofil 2 enthält eine Scheide 22; diese ermöglicht ein einfaches Aufstecken auf den flanschförmig ausgebildeten Rand 12.

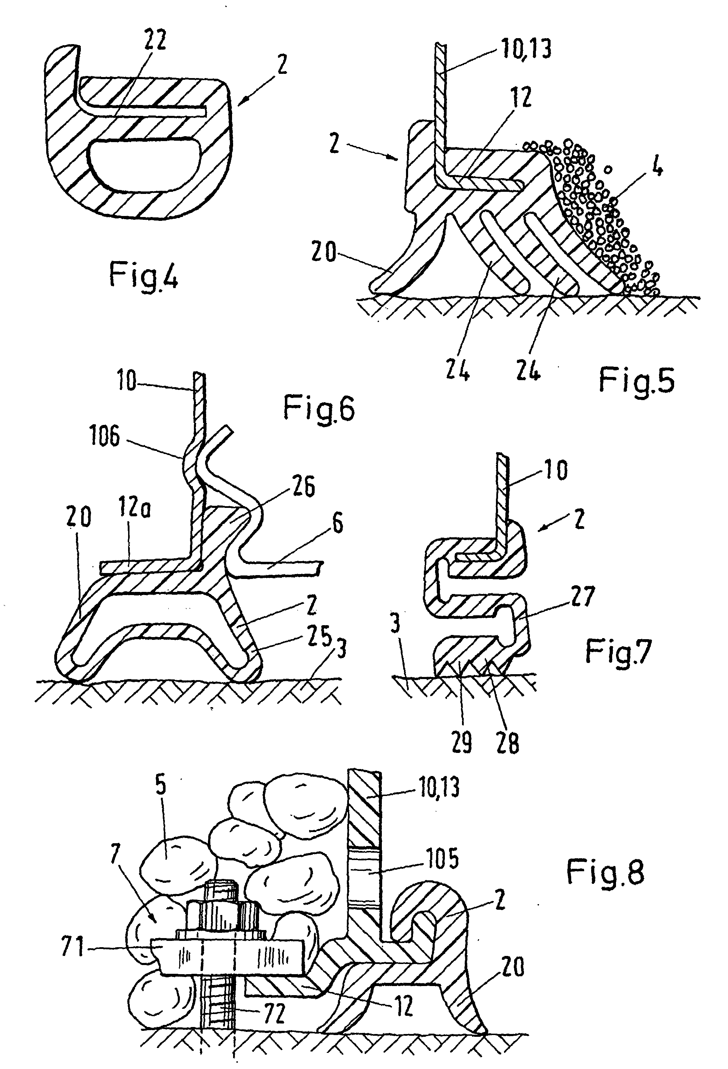

Die Lippen 20 des Dichtungsprofils 2 dienen einerseits als Auflagefläche 23 des Drainageelements 1 auf dem Boden 3; andererseits sind sie zum Abdichten vorgesehen. Diese Funktionen können auch auf andere Weise realisiert werden, beispielsweise mit einem elastischen Streifen 2, der pneuartig, einen Hohlraum 21 enthaltend ausgebildet ist, wobei der Hohlraum 21 sich längs des ganzen Umfangs des Randes 12 erstreckt: siehe Fig.4. Es können auch mehrere Hohlräume, nebeneinander und/oder hintereinander, vorgesehen sein.

Der oder jeder Hohlraum 21 kann eine Füllung aus einem offenporigen, elastomeren Schaumkörper enthalten (in den Zeichnungen nicht gezeigt). Solche Füllungen können auch nur in einzelnen der Hohlräume enthalten sein.

Fig.5 zeigt ein drittes Ausführungsbeispiel: eine Lippe 20 ist gegen den Innenraum des Drainageelements 1 gerichtet und drei parallele Lamellen 24 nach aussen gegen das aus feinkörnigem Filtermedium 4 bestehende Filterbett. Die Lamellen 24 bewirken eine hinsichtlich der Rauhigkeit der Bodenoberfläche 31 besonders dichte Barriere gegen das Eindringen von feinkörnigem Filtermedium 4. In Fig.5 ist das Dichtungsprofil 2 dargestellt, wie es auf dem Rand 12 der Seitenwände 10 oder 13 aufgesteckt ist.

Bei dem Ausführungsbeispiel gemäss Fig.6 ist das Dichtungsprofil 2 wieder pneuartig ausgebildet, wobei ein Pneuteil 25 so geformt ist, dass mit zwei Lippen 20 die Auflagefläche und die Dichtung gebildet werden. Mit einem nach oben stehenden Kamm 26 wird das Dichtungsprofil 2 zwischen Wand 10 und Bügeln 6 festgeklemmt. Die Bügel 6 erstrecken sich zwischen den beiden Seitenwänden 10 des Drainageelements 1 und greifen dabei in nutartige Vertiefungen 106 der Wände 10 ein.

Das in Fig.7 gezeigte Ausführungsbeispiel zeigt den Querschnitt durch einen balgartigen Dichtungsstreifen 2, der ein S-förmiges Profil 27 aufweist. Die Auflagefläche wird durch eine Mehrzahl von feinen Kämmen (oder Zähnen im Querschnitt) gebildet, die auf der Sohle eines Fussteils 28 angeordnet sind und die sich parallel zur Wand 10 erstrecken.

Die Drainageelemente 1 können auch aus Kunststoff gefertigt sein, siehe Fig.8. Für den Durchtritt der behandelten Flüssigkeit und der Spülflüssigkeit sind Löcher 105 vorgesehen (ebenso Löcher für das Spülgas, nicht gezeigt); das Filterbett ist im Bereich der Drainageelemente aus Kies 5 aufgebaut, für den die Löcher 105 undurchlässig sind. Das Dichtungsprofil 2 ist bei diesem Beispiel auf der Innenseite der Wand 10 angeordnet.

Die Drainageelemente 1 sind am flanschförmigen Rand 12 mit Befestigungsmitteln 7 (Laschen 71 und Schrauben 72) auf dem Beckenboden 3 angebracht. Die Dichtungsprofile oder elastischen Streifen 2 werden gleichzeitig durch die Befestigungsmittel 7 auf den Boden 3 aufgepresst. Dies gilt für alle Ausführungsbeispiele. Bei den Beispielen der Figuren 1 bis 5 sowie der Fig.7 sind die Ränder 12 von den Dichtungsprofilen 2 abgedeckt. Hier stehen die Laschen 71 der Befestigungsmittel 7 nicht in direktem Kontakt mit den Rändern 12 sondern liegen auf den abdeckenden Dichtungsteilen auf.

## Patentansprüche

1. Drainageelement (1) zu rückspülbaren Filterbecken, welches tunnelförmig, nach unten offen ausgebildet ist, mit welchem am Boden (3) eines Beckens eine behandelte Flüssigkeit abführbar ist und eine Spülflüssigkeit sowie ein Spülgas in ein Filterbett (4) einbringbar ist,
**dadurch gekennzeichnet, dass** das Element einen unteren Rand (12) mit einem elastischen Streifen (2) aufweist, der Unebenheiten ausgleichend gegen den Beckenboden abdichtet, so dass insbesondere keine Partikel eines feinkörnigen Filtermediums in das Drainageelement unter dessen Rand einschwemmbar sind.

2. Drainageelement nach Anspruch 1, **dadurch gekennzeichnet, dass** der elastische Streifen (2) ein ringförmig geschlossenes, über den gesamten Rand (12) sich erstreckendes Dichtungsprofil ist.

3. Drainageelement nach Anspruch 2, **dadurch gekennzeichnet, dass** sein Rand (12) flanschförmig ausgebildet und das Dichtungsprofil (2) auf diesem Rand aufgesteckt ist.

4. Drainageelement nach einem der Ansprüche 1 bis 3, **dadurch gekennzeichnet, dass** der elastische Streifen (2) mindestens eine Lippe (20) aufweist, die als Auflagefläche und zum Abdichten vorgesehen ist.

5. Drainageelement nach einem der Ansprüche 1 bis 3, **dadurch gekennzeichnet, dass** der elastische Streifen (2) pneuartig ausgebildet ist und mindestens einen Hohlraum (21) enthält, der sich längs des Randes (12) erstreckt.

6. Drainageelement nach Anspruch 5, **dadurch gekennzeichnet, dass** der oder jeder Hohlraum (21) eine Füllung aus einem offenporigen, elastomeren Schaumkörper enthält oder dass eine derartige Füllung nur in einzelnen der Hohlräume enthalten ist.

7. Drainageelement nach einem der Ansprüche 1 bis 6, **dadurch gekennzeichnet, dass** die Wand (10, 11, 13) des Drainageelements aus einem metallischen Werkstoff, insbesondere aus nichtrostendem Stahl, besteht und dass für den Durchtritt von Fluiden, nämlich der genannten Flüssigkeiten sowie des Spülgases, Schlitze (101, 102, 111, 131, 132) vorgesehen sind, die für Partikel des feinkörnigen Filtermediums (4) nicht durchlässig sind.

8. Filterbecken mit Drainageelementen gemäss einem der Ansprüche 1 bis 6, **dadurch gekennzeichnet, dass** die Drainageelemente (1) mit Befestigungsmitteln (7) auf dem Beckenboden (3) angebracht sind und dass gleichzeitig durch die Befestigungsmittel die elastischen Streifen (2) auf den Boden aufgepresst sind.

9. Filterbecken nach Anspruch 8 und mit Drainageelementen nach Anspruch 7, **dadurch gekennzeichnet, dass** sein Filterbett nur aus feinkörnigem Filtermedium (4) besteht.

10. Filterbecken nach Anspruch 8, **dadurch gekennzeichnet, dass** die Drainageelemente (1) aus Kunststoff gefertigt sind, dass für den Durchtritt von Fluiden, nämlich der genannten Flüssigkeiten sowie des Spülgases, Löcher (105) vorgesehen sind und dass das Filterbett im Bereich der Drainageelemente aus Kies (5) aufgebaut ist, für den die Löcher undurchlässig sind.

11. Verwendung von Filterbecken gemäss einem der Ansprüche 8 bis 10 zur Wasseraufbereitung oder Abwasserreinigung.

## Claims

1. A drainage element (1) for back flushable filter basins which is in the form of a downwardly-open tunnel and by means of which a treated liquid can be removed from the bottom (3) of a basin and a flushing liquid and a flushing gas can be introduced into a filter bed (4), **characterised in that** the element has a lower edge (12) with an elastic strip (2) which seals against the bottom of the basin, compensating for irregularities, so that in particular no particles of a fine-grained filter medium can be washed into the drainage element under the edge thereof.

2. A drainage element according to Claim 1, **characterised in that** the elastic strip (2) is an annularly closed, profiled seal extending the full length of the edge (12).

3. A drainage element according to Claim 2, **characterised in that** its edge (12) has the form of a flange and the profiled seal (2) is fitted to this edge.

4. A drainage element according to one of claims 1 to 3, **characterised in that** the elastic strip (2) has at least one lip (20) which is provided as a support face and for sealing.

5. A drainage element according to one of claims 1 to 3, **characterised in that** the elastic strip (2) is formed in the manner of a rubber tyre and contains at least one cavity (21) extending along the edge (12).

6. A drainage element according to Claim 5, **characterised in that** the or each cavity (21) contains a filling of an open-pored, elastomeric foam body or **in that** such a filling is contained in only some of the cavities.

7. A drainage element according to one of claims 1 to 6, **characterised in that** the wall (10, 11, 13) of the drainage element consists of a metallic material, in particular stainless steel, and that slots (101, 102, 111, 131, 132) are provided for the passage of fluids, namely the above-mentioned liquids and the flushing gas, said slots (101, 102, 111, 131, 132) being impassable to particles of the fine-grained filter medium (4).

8. A filter basin with drainage elements according to one of claims 1 to 6, **characterised in that** the drainage elements (1) are mounted to the floor (3) of the basin by fixing means (7) and **in that** the elastic strips (2) are at the same time pressed against the bottom by said fixing means.

9. A filter basin according to Claim 8 and having drainage elements according to Claim 7, **characterised in that** its filter bed consists only of fine-grained filter medium (4).

10. A filter basin according to Claim 8, **characterised in that** the drainage elements (1) are made of plastics material, **in that** holes (105) are provided for the passage of fluids, namely the above-mentioned liquids and the flushing gas, and **in that** in the area of the drainage elements the filter bed is built up of gravel (5) for which the holes are impassable.

11. An application of filter basins according to one of claims 8 to 10 for treating water or purifying sewage.

## Revendications

1. Elément de drainage (1) pour des bassins de filtrage à nettoyage par contre-courant, réalisé en forme de tunnel, ouvert vers le bas, à l'aide duquel, au fond (3) d'un bassin, un liquide traité peut être évacué et un liquide de rinçage ainsi qu'un gaz de rinçage peuvent être introduits dans un lit filtrant (4),
l'élément présente un bord inférieur (12) avec une bande (2) élastique, isolant de façon étanche contre le fond de bassin en compensant les inégalités, de sorte qu'en particulier, aucune particule, venant d'un milieu filtrant se présentant sous forme de grains fins, ne puisse pénétrer dans l'élément de drainage, sous son bord.

2. Elément de drainage selon la revendication 1, **caractérisé en ce que** la bande (2) élastique est un profil d'étanchéité fermé, en forme d'anneau, s'étendant sur la totalité du bord (12).

3. Elément de drainage selon la revendication 2, **caractérisé en ce que** son bord (12) est conformé en repli et le profil d'étanchéité (2) est enfiché sur ce bord.

4. Elément de drainage selon la revendication selon l'une des revendications 1 à 3, **caractérisé en ce que** la bande élastique (2) présente au moins une lèvre (20) prévue en tant que face de pose et pour assurer l'étanchéité.

5. Elément de drainage selon la revendication selon l'une des revendications 1 à 3, **caractérisé en ce que** la bande élastique (2) est réalisé à la façon d'un pneumatique et contient au moins un espace creux (21) s'étendant le long du bord (12).

6. Elément de drainage selon la revendication 5, **caractérisé en ce que** le ou chaque espace creux (21) contient un remplissage d'un corps alvéolaire élastomère, à pores ouverts, ou **en ce qu'**un tel remplissage n'est contenu que dans certains des espaces creux.

7. Elément de drainage selon l'une des revendications 1 à 6, **caractérisé en ce que** la paroi (10, 11, 13) de l'élément de drainage est formée d'un matériau métallique, en particulier d'acier inoxydable, et **en ce que**, pour le passage de fluide, précisément des liquides cités ainsi que du gaz de rinçage, sont prévues des fentes (101, 102, 111, 131, 132) imperméables à des particules du milieu filtrant (4), se présentant sous la forme de grains fins.

8. Bassin filtrant équipé d'éléments de drainage selon l'une des revendications 1 à 6, **caractérisé en ce que** les éléments de drainage (1) sont montés sur le fond de bassin (2) à l'aide de moyens de fixation (7), et **en ce que**, simultanément, les bandes (2) élastiques sont pressées sur le fond à l'aide des moyens de fixation.

9. Bassin filtrant selon la revendication 8 et équipé d'éléments de drainage selon la revendication 7, **caractérisé en ce que** son lit filtrant n'est formé que d'un milieu filtrant (4) se présentant sous la forme de grains fins.

10. Bassin filtrant selon la revendication 8, **caractérisé en ce que** les éléments de drainage (1) sont fabriqués en matière synthétique, **en ce que** des trous (105) sont prévus pour le passage de fluide, précisément des liquides cités ainsi que du gaz de rinçage, et **en ce que** le lit filtrant est formé, dans la zone des éléments de drainage, de gravier (5), pour lequel les trous sont imperméables.

11. Utilisation de bassins de filtrage selon l'une des revendications 8 à 10, pour le traitement d'eau ou bien pour l'épuration des eaux usées.
